# EUROPEAN PATENT APPLICATION

(11) **EP 4 567 218 A1**
(43) Date of publication of application: **11.06.2025**
(21) Application number: 23767936.0
(22) Date of filing: 01.08.2023
(51) Int. Cl.: E04F 13/08, E04F 13/18

(54) **IMPROVED WATERPROOFING PANEL**

(30) Priority: 04.08.2022 ES 202230723
(71) Applicant: Estil Guru, S.L., 46870 Ontinyent (Valencia) (ES)
(72) Inventor: RUIZ PÉREZ, Francisco Javier, 46870 Ontinyent (Valencia) (ES); PÉREZ BERNABEU, Javier, 46870 Ontinyent (Valencia) (ES); FERRÁNDIZ GISBERT, Francisco, 46870 Ontinyent (Valencia) (ES)
(74) Representative: Isern Patentes y Marcas S.L.
(86) International application number: PCT/ES2023/070494
(87) International publication number: WO 2024/028534

(57) **Abstract**

The present invention relates to an improved waterproofing panel, comprising a plurality of sections with a predominantly flat and polygonal geometry, and said sections being enabled to be arranged and fitted one after the other in an extension of their own flat geometry; wherein each section is made up of a rigid and flat core of the same polygonal geometry as the section itself and a waterproofing sheet superimposed on the core and joined to one another, wherein the sheet is covering the core and said sheet has projections that extend and protrude from the core on two contiguous sides of the same core; so that in the arrangement of the sections one after the other, the projections of the sheet of one section are superimposed on the other adjacent section.

## Description

### OBJECT OF THE INVENTION

The object of the present invention application is to register an improved waterproofing panel, which incorporates notable innovations and advantages compared to techniques used hitherto.

More specifically, the invention proposes the development of an improved waterproofing panel, which due to the particular arrangement thereof, allows waterproofing in partitioning construction, such as shower walls, which are going to be covered with ceramic tile or similar, further facilitating its installation.

### BACKGROUND OF THE INVENTION

Many variants of dry partitioning panels made with different materials are known in the current state of the art: fibre cement, plasterboard, composites with rigid foams of different natures and with different layers and surface finishes, etc.

To be used in interior humid areas, most of the existing panels have versions that are resistant to humidity or are specifically designed for use in said interior humid areas, facilitating the required waterproofing thereof.

Panels based on mineral agglomerates in combination with reinforcing fibres or meshes, even with lightening fillers and water-repellent treatments, are much heavier and more difficult to handle and cut during installation than rigid foam composites. Furthermore, although they properly resist frequent contact with humidity, they absorb and transmit same, requiring complete waterproofing treatment.

Due to the standardisation of the construction systems, the partitioning panels are sized in standard formats and widths and regulated by standards regarding physical and mechanical characteristics.

The present invention contributes to resolving this problem, since it allows for a very notable improvement in the existing panels, since it allows a correct waterproofing of the wall area, as well as optimal support for its coating with ceramic or similar material.

### DESCRIPTION OF THE INVENTION

The present invention has been developed in order to provide an improved waterproofing panel, which comprises a plurality of sections with a predominantly flat and polygonal geometry, and said sections being enabled to be arranged one after the other in an extension of their own flat geometry; wherein each section is made up of a rigid and flat core of the same polygonal geometry as the section itself and a waterproofing sheet superimposed on the core and joined to one another, wherein the sheet is covering the core and said sheet has projections that extend and protrude from the core on contiguous sides of the same core; so that in the arrangement of the sections one after the other, the projections of the sheet of one section are superimposed on the other adjacent section.

Preferably, in the improved waterproofing panel, the sections have a flat parallelogram geometry.

Preferably, the improved waterproofing panel comprises a structure by way of a frame, enabled by means of mechanical attachment means for fastening and supporting the sections in their arrangement one after the other.

Preferably, in the improved waterproofing panel, the attachment means comprise screw elements that pass through or are inserted into the sections and which are attached to the structure.

Additionally, in the improved waterproofing panel, the attachment means further comprise waterproofing elements having a conical geometry, and enabled so that the screw elements are inserted inside at the same time as said screw elements pass through or are inserted into the sections.

Alternatively, in the improved waterproofing panel, the waterproofing elements of the attachment means have discoidal perimeter lips.

Alternatively, in the improved waterproofing panel, the waterproofing elements have an elastomeric core.

Alternatively, in the improved waterproofing panel, the discoidal perimeter lips have attachment points enabled to prevent movements prior to positioning the attachment means.

Additionally, in the improved waterproofing panel, the structure has an arrangement adapted to the polygonal geometry of the sections.

Additionally, in the improved waterproofing panel, the structure has an arrangement by way of a grid and adapted to the parallelogram geometry of each of the sections.

Alternatively, in the improved waterproofing panel, the core is made of foam made of polymeric material.

Preferably, in the improved waterproofing panel, the sheet comprises a non-woven fabric.

Alternatively, the improved waterproofing panel has at least one fold line that runs transversely across its flat dimension.

Additionally, in the improved waterproofing panel, the fold line is the result of linear weakening in the thickness of some of the sections, and which, as the sections are arranged one after the other, make up the fold line.

Due to the present invention, a very notable improvement of the existing panels is achieved, since it allows a correct waterproofing of the wall area, as well as optimal support for its coating with ceramic or similar material.

It is also important to point out that this type of improved waterproofing panel of the invention must provide a surface that is as flat and homogeneous as possible, precisely to ensure a correct positioning of the exposed coating parts, so that the features of the present invention come to seek this technical and constructive milestone, in addition to providing very relevant advantages when it comes to the on-site assembly method of said panels of the present invention.

Other features and advantages of the improved waterproofing panel object of the present invention will become apparent from the description of a preferred, but not exclusive, embodiment, which is illustrated by way of non-limiting example in the accompanying drawings, wherein:

### BRIEF DESCRIPTION OF DRAWINGS

Figure 1 is a schematic and plan view of a preferred embodiment of the improved waterproofing panel of the present invention.
Figure 2 is a schematic plan and elevation view of a section in a preferred embodiment of the improved waterproofing panel of the present invention.
Figure 3 is a schematic plan view of a plurality of sections arranged one after the other in a preferred embodiment of the improved waterproofing panel of the present invention.
Figures 4 and 5 are schematic views of waterproofing elements in a preferred embodiment of the improved waterproofing panel of the present invention.

### DESCRIPTION OF A PREFERRED EMBODIMENT

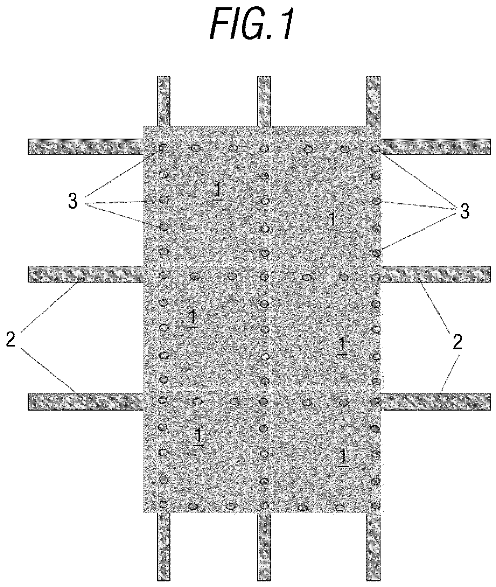

As schematically shown in Figure 1, the improved waterproofing panel of the invention comprises a plurality of sections 1 with a predominantly flat and polygonal geometry. In this preferred embodiment represented in the drawings, the sections 1 have a flat parallelogram geometry, in other preferred embodiments the sections 1 being able to have another polygonal geometry adapted to the same invention.

Said sections 1 are enabled to be arranged one after the other in a prolongation of their own flat geometry, as can also be seen schematically in the same Figure 1.

Moreover, each section 1 is made up of a rigid and flat core 11 of parallelogram geometry. Said core 11 is made of rigid material by way of a rigid foam made of polymeric material (preferably XPS extruded polystyrene, EPS expanded polystyrene, PUR polyurethane, among others).

Section 1 is also made up of a waterproofing sheet 12, comprising a non-woven fabric.

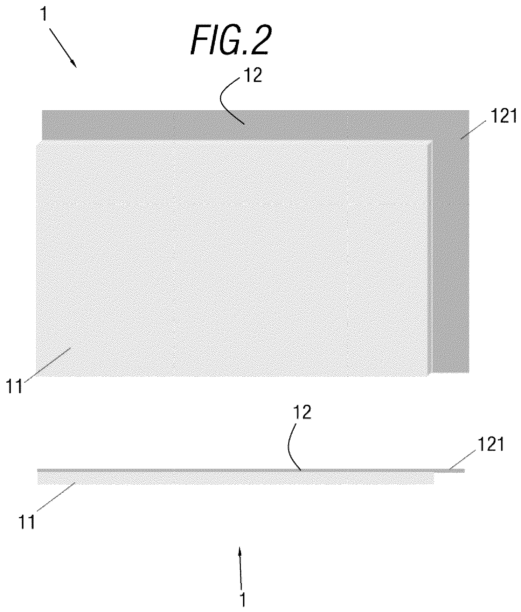

The sheet 12 is superimposed on the core 11, as can be schematically seen in a plan and elevation view in Figure 2.

The sheet 12 is covering the core 11, such that the same sheet 12 presents projections 121 that extend and protrude from the core 11 on two contiguous sides of the same core 11. Furthermore, the core 11 and the sheet 12 are joined to one another by co-injection, over-injection or heat-welding means.

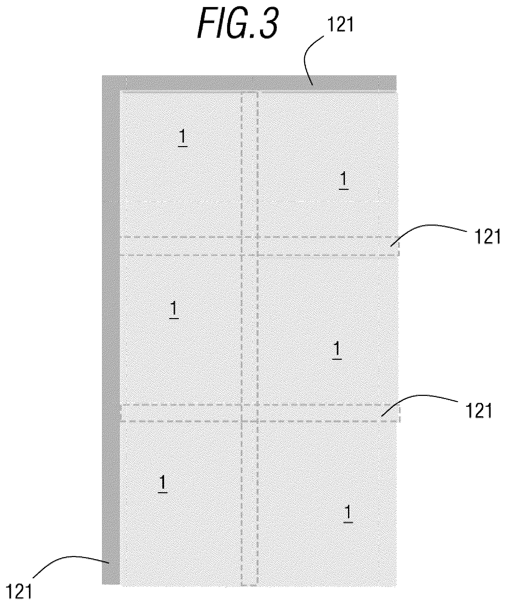

In this way, in the arrangement of the sections 1 one after the other, the projections 121 of the sheet 12 of one section 1 are superimposed on the other adjacent section 1, as can be schematically seen and also in dashed lines in Figure 3.

In this preferred embodiment, as can be seen in Figure 1, the improved waterproofing panel of the present invention also comprises a structure 2 by way of a frame, enabled by means of mechanical attachment means for fastening and supporting the sections 1 in their arrangement one after the other.

Also in this preferred embodiment, said structure 2 has an arrangement by way of a grid and adapted to the parallelogram geometry of each of the sections 1.

As can be seen in Figure 1, in this preferred embodiment, the attachment means in the structure 2 comprise screw elements 3 that pass through or are inserted into sections 1 and that are attached on structure 2.

The aforementioned projections 121 of the sheet 12 beyond the perimeter of the rigid core 11 of each section 1 of the improved waterproofing panel of the invention, can therefore overlap to provide projections of the same that can overlap a contiguous section 1 and adjacent sections, in order to overlap and provide waterproofing of the attachment means between contiguous sections 1, as well as providing the waterproofing of the mechanical attachment points where the attachment means of the same sections 1 are arranged on the support structure 2 intended therefor, which are carried out in this preferred embodiment with screw elements 3.

The improved waterproofing panel of the present invention represents a very notable technical improvement that is very relevant in terms of optimising the on-site assembly process of this type of panels, since currently, when the installer performs the mechanical attachment of sections of a panel to a support structure, by means of mechanical attachment elements such as screw elements, preferably and logically this attachment causes a substantial weakening and even breakage of the waterproofing of some section of the panel, so that, after carrying out said attachment with mechanical elements, reworking must be undertaken to ensure the waterproofing of said area of insertion of the aforementioned screw elements, in order not to cause a decrease in the correct waterproofing of the humid area to be waterproofed, such as a shower area, among others, through said attachment points.

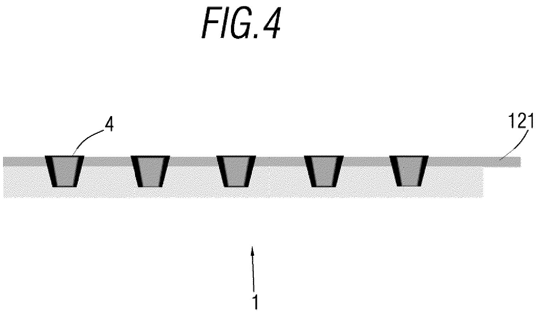

To prevent this situation, in this preferred embodiment, as schematically represented in Figure 4, the attachment means further comprise waterproofing elements 4 or washers made of semi-rigid material and which have a conical geometry and are arranged at attachment points for attaching the screw elements 3, and enabled so that the screw elements 3 can be inserted inside same at the same time that said screw elements 3 are in the sections 1.

These waterproofing elements 4 provide a distribution of the stresses that are produced in said operations of mechanical attachment of the sections 1 by means of screw elements 3, as well as providing a waterproof seal of said area.

This will have a very favourable impact on those mechanical attachment points that cannot be covered by the perimeter projections 121 of the sheet 12, and therefore, to improve the assembly process of the improved waterproofing panel of the invention. The incorporation of said waterproofing element 4 or washer can provide greater safety in terms of general waterproofing of the area, as well as avoiding the need to carry out rework to ensure the waterproofing of said attachment points, after the sections 1 are assembled with the aforementioned screw elements 3, unlike the working procedure in the current state of the art.

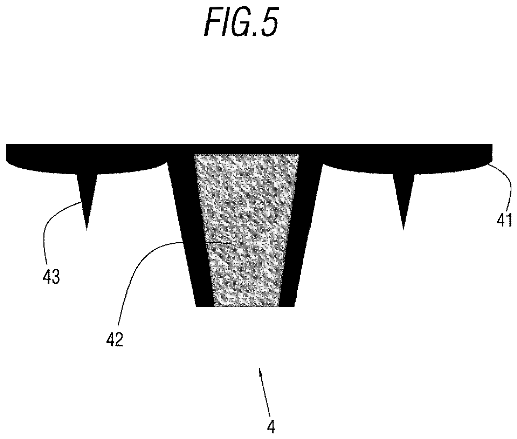

Additionally, said waterproofing elements 4 can have discoidal perimeter lips 41, as can be seen in Figure 5, intended to be elastically deformed when the screw element 3 or screw passes through its core and, with this, providing a watertight seal of said circular or discoidal perimeter around the passage area of the screw element 3 itself.

Also additionally, the aforementioned waterproofing elements can present an elastomeric core 42, for example of a self-binding putty, intended to provide a watertight housing for the screw element 3 throughout the attachment passage through the same section 1 of the improved waterproofing panel of the invention, and with this, to also be able to ensure the waterproofing of said critical area.

Additionally, the discoidal perimeter lips 41 can present attachment points 43 in section 1, in order to avoid movements prior to the positioning of the attachment means or screw elements 3.

With the incorporation of said waterproofing elements 4 or washers along each section 1 of the improved waterproofing panel of the invention, housing points will be provided for the mechanical attachment means for attaching the section to the support structure 2, which will also ensure the waterproofing of said area, which will entail a very substantial improvement in the global assembly process of the improved waterproofing panel of the invention, as well as in the use of fluid waterproofing materials after its assembly, to ensure the correct waterproofing of said critical points, such as the connection joints between sections 1 and the mechanical attachment points thereof on the respective support structure 2.

In a preferred embodiment, the improved waterproofing panel of the invention has a fold line (not shown in the drawings) that runs transversely across its flat dimension. Said fold line is the result of linear weakening in the thickness of the sections 1, and since the sections 1 are arranged one after the other, they make up the fold line that runs along the flat dimension resulting from the improved waterproofing panel of the invention.

Said fold line provides a possibility of folding the entire flat extension of the improved waterproofing panel of the invention into two halves, which entails a substantial logistical and handling advantage, both in transfer, transport and on-site handling operations, prior to their installation.

The fold line provides greater adaptability of the improved waterproofing panel of the invention, both at the time of installation in the humid area or during the transport thereof.

It is for all these reasons that the improved waterproofing panel of the invention provides a very substantial optimisation, both in terms of the use of materials and the execution time of the assembly method of this type of construction panels in installations and humid areas, in order to subsequently be able to install ceramic or similar coatings on said waterproofing base.

The details, shapes, dimensions and other accessory elements, as well as the materials used to manufacture the improved waterproofing panel of the invention, may be suitably substituted for others which are technically equivalent and do not diverge from the essential nature of the invention, nor the scope defined by the claims included below.

## Claims

1. An improved waterproofing panel comprising a plurality of sections (1) with a predominantly flat and polygonal geometry, and said sections (1) being enabled to be arranged and fitted one after the other in an extension of their own flat geometry; **characterised in that** each section (1) is made up of a rigid and flat core (11) of the same polygonal geometry as the section (1) itself and a waterproofing sheet (12) superimposed on the core (11) and joined to one another, wherein the sheet (12) is covering the core (11) and said sheet (12) has projections (121) that extend and protrude from the core (11) on two contiguous sides of the same core (11); so that in the arrangement of the sections (1) one after the other, the projections (121) of the sheet (12) of one section (1) are superimposed on the other adjacent section (1).

2. The improved waterproofing panel according to claim 1, wherein the sections (1) have a flat parallelogram geometry.

3. The improved waterproofing panel according to claim 1 or 2, comprising a structure (2) by way of a frame, enabled by means of mechanical attachment means for fastening and supporting the sections (1) in their arrangement one after the other.

4. The improved waterproofing panel according to claim 3, wherein the attachment means comprise screw elements (3) that pass through or are inserted into the sections (1) and which are attached to the structure (2).

5. The improved waterproofing panel according to claim 4, wherein the attachment means further comprise waterproofing elements (4) having a conical geometry, and enabled so that the screw elements (3) are inserted inside at the same time as said same screw elements (3) pass through or are inserted into the sections (1).

6. The improved waterproofing panel according to claim 5, wherein the waterproofing elements (4) of the attachment means have discoidal perimeter lips (41).

7. The improved waterproofing panel according to claim 5 or 6, wherein the waterproofing elements (4) have an elastomeric core (42).

8. The improved waterproofing panel according to claim 6 or according to claim 7 when it depends on claim 6, wherein the discoidal perimeter lips (41) have attachment points (43) enabled to prevent movements prior to positioning the attachment means.

9. The improved waterproofing panel according to any of claims 2 to 8, wherein the structure (2) has an arrangement adapted to the polygonal geometry of each of the sections (1).

10. The improved waterproofing panel according to any of claims 3 to 9 when they depend on claim 2, wherein the structure (2) has an arrangement by way of a grid and adapted to the parallelogram geometry of each of the sections (1).

11. The improved waterproofing panel according to any of the preceding claims, wherein the core (11) is made of foam made of polymeric material.

12. The improved waterproofing panel according to any of the preceding claims, wherein the sheet (12) comprises a non-woven fabric.

13. The improved waterproofing panel according to any of the preceding claims, which has at least one fold line that runs transversely across its flat dimension.

14. The improved waterproofing panel according to the preceding claim, wherein the fold line is the result of linear weakening in the thickness of some of the sections (1), and which, as the sections (1) are arranged one after the other, make up the fold line.
